Europäisches Patentamt

European Patent Office

Office européen des brevets

(19)

(11) Veröffentlichungsnummer : **0 243 775**
**B1**

(12) **EUROPÄISCHE PATENTSCHRIFT**

(45) Veröffentlichungstag der Patentschrift :
03.01.90

(51) Int. Cl.⁵ : **C 08 F299/06**

(21) Anmeldenummer : 87105461.5

(22) Anmeldetag : 13.04.87

(54) **Verfahren zur Herstellung von thermoplastischen Polyurethanen für die Strahlenvernetzung und ihre Verwendung.**

(30) Priorität : 24.04.86 DE 3613790

(43) Veröffentlichungstag der Anmeldung :
04.11.87 Patentblatt 87/45

(45) Bekanntmachung des Hinweises auf die Patenterteilung : 03.01.90 Patentblatt 90/01

(84) Benannte Vertragsstaaten :
BE CH DE FR GB IT LI NL

(56) Entgegenhaltungen :
DE—A— 1 964 834
GB—A— 1 133 436
US—A— 4 312 972

(73) Patentinhaber : BAYER AG

D-5090 Leverkusen 1 Bayerwerk (DE)

(72) Erfinder : Goyert, Wilhelm, Dr.
Haberstrasse 48
D-5090 Leverkusen 1 (DE)
Erfinder : Winkler, Jürgen, D.I.
Gerhard-Hauptmann-Strasse 14-16
D-5090 Leverkusen 3 (DE)
Erfinder : Perrey, Hermann, Dr.
Auf der Rheinaue 8
D-4150 Krefeld 11 (DE)
Erfinder : Heidingsfeld, Herbert, D.I.
Hasenwinkelweg 8
D-5020 Frechen (DE)

EP 0 243 775 B1

EP 0 243 775 B1

**Beschreibung**

Es werden technisch einfach durchzuführende, vorzugsweise kontinuierliche Verfahren zur Herstellung von thermoplastischen Polyurethanen (TPU), vorzugsweise in Granulatform, zur Verwendung bei der Verarbeitung zu Formkörpern, welche strahlenvernetzt werden können, beschrieben. Diese Polyurethan(Granulat)e können anschließend zu Formkörpern, wie Kabeln, Schläuchen, Profilen und Extrusionsblaskörpern in üblicher Weise verarbeitet werden. Durch energiereiche β- und/oder γ-Strahlen, bevorzugt durch Elektronenstrahlen (β-Strahlen) werden die Formkörper unter Anwendung optimaler Strahlungsdosen vernetzt. Es werden dann Formkörper, die sich durch eine erhöhte Wärmeformbeständigkeit, Wärmedruckbeständigkeit, Lösungsmittelbeständigkeit, niedrigen Reibungskoeffizienten und insbesondere durch ein Nichtabtropfen in der Flamme auszeichnen, erhalten.

Die Verfahren werden bevorzugt kontinuierlich im Bandgießverfahren, insbesondere aber in (Reaktions) schneckenmaschinen oder in (Reaktions) knetern durchgeführt. Die Abkühlung der Acrylat- und/oder Methacrylat-Vernetzer enthaltenden Polyurethanelastomeren erfolgt vorzugsweise in Flüssigkeitsbädern, insbesondere in Wasser. Die Granulate werden getrocknet und können dann zu den verschiedensten Formartikeln, insbesondere zu Schläuchen, Kabelummantelungen, Profilen, Spritzgießartikeln und Formblaskörpern verarbeitet werden.

Diese Formkörper werden dann durch Vernetzung mit γ- und/oder β-Strahlen, besonders bevorzugt durch Elektronenstrahlen (β-Strahlen) vernetzt. Hierdurch werden besondere Eigenschaften von thermoplastischen Polyurethanen erhalten, die ansonsten nicht oder nicht ohne weiteres erreichbar sind. So erhöht sich z. B. die Wärmeformbeständigkeit von Kabelummantelungen von 100 °C auf 200 bis 220 °C. Die Formkörper sind anschließend besser lösungsmittelbeständig in polaren Medien wie z. B. Methylenchlorid oder Tetrahydrofuran und der Reibungskoeffizient dieser Formkörper wird erniedrigt. Polyurethanelastomere ohne Vernetzerzusatz ergeben dagegen bei Bestrahlung nicht die genannten Eigenschaftsverbesserungen, sondern zeigen starken Polymerabbau. Überraschenderweise ergeben Polyurethane, welche (Meth)acrylate über funktionelle Gruppen im Polyurethanmolekül eingebaut haben, deutlich schlechtere Eigenschaften und sind hier nicht bevorzugt.

Der Stand der Technik zeigt vielfache Bemühungen, Polyurethanelastomere mit verbesserter Strahlenvernetzbarkeit aufzubauen. So wird in der EP-A 144 065 ein Tauchprozeß zur Herstellung von Licht- und/oder UV-vernetzbarem Polyurethan-Sicherheitsglas beschrieben. Die Polyurethane sind zumeist auf aliphatischer Isocyanatbasis aufgebaut. Die so erhaltenen Folien müssen einem sehr aufwendigen Tauchprozeß unterworfen werden, um die zur Vernetzung dienenden, ungesättigten Verbindungen auf Basis polyfunktioneller Acrylate oder Methacrylate unter Zusatz von durch (UV-) Strahlung aktivierbaren Initiatoren wie Benzophenonderivaten eindringen zu lassen. Trotzdem befinden sich die Vernetzer nur an der Oberfläche der Folie. Es wird auf diese Methode nur eine sehr dünne Schicht erzielt, die mit UV-Licht vernetzt werden kann. Im Gegensatz hierzu können nach dem beanspruchten Verfahren Polyurethanformkörper hergestellt werden, die beliebige Schichtdicken aufweisen, innerhalb des Formkörpers gleichmäßig verteilt Acrylate und/oder Methacrylate enthalten und eine schnelle und intensive Vernetzung durch β- und/oder γ-Strahlen erfahren.

In der EP-A 48 913 werden Polyurethane (mit endständigen oder seitenständigen) Doppelbindungen beschrieben, die sich zur Herstellung von fotopolymerisierbaren Aufzeichnungsmaterialien, z. B. für Druckplatten und Fotoresistmaterialien eignen, die danach durch Licht/UV-Strahlen vernetzt werden. Die fotopolymerisierbaren Polyurethane werden durch Umsetzung von NCO-Prepolymeren auf Polyether-/Diisocyanat-Basis mit einbaufähigen Bis-acrylesterdiolen in Lösung erhalten. Sie können zusätzlich einen niedermolekularen Acryl- oder Methacrylester eines zwei- oder mehrwertigen Alkohols als polymerisierbare Verbindungen enthalten. Zusätzlich enthalten sie Fotoinitiatoren und werden üblicherweise mit UV-Licht fotopolymerisiert, obwohl auch Elektronen-, Röntgen- und Laserstrahlung als aktinische Strahlung erwähnt sind. Der Gehalt an fotopolymerisierbaren Verbindungen im fotopolymerisierbaren Gemisch, das auch polymere Bindemittel enthalten kann liegt im allgemeinen bei 20 bis 100, vorzugsweise 30 bis 60 Gew.-%.

Im Stand der Technik werden weiterhin eine Reihe von Methoden beschrieben, wie man in Lösung Polyurethane aufbaut, welche ethylenisch ungesättigte Gruppen über einbaufähige Verbindungen enthalten. Diese Polyurethane werden, vorzugsweise gelöst in überschüssigen ethylenisch ungesättigten Monomeren, radikalisch (mit z. B. Peroxiden) zu Beschichtungen vernetzt (siehe US-PS 4 097 439, 4 073 828, 3 641 199 und 4 153 776).

In der US-PS 4 446 286 werden Polyurethane aufgeführt, die Doppelbindungen enthalten und denen Acrylate oder Methacrylate zugegeben werden. Diese Polyurethane werden nach einem mehrstufigen, aufwendigen Prozeß aufgebaut. Außerdem müssen diese Polyurethan-Elastomere im Gegensatz zu der hier beanspruchten Verfahrensweise, Doppelbindungen im Molekülgerüst enthalten.

In der DE-OS 34 12 002 wird ein Verfahren zur Herstellung eines extrudierbaren, Vernetzungsmittel enthaltenden, durch Elektronenstrahlen vernetzbaren Materials auf der Basis von thermoplastischen Polyurethan-Elastomeren beschrieben, bei dem das für die Vernetzung erforderliche Vernetzungsmittel dem Polyurethanelastomergranulaten in flüssiger Form und in solcher Menge auf die Oberfläche üblicher Granulate aufgegeben (aufgetrudelt) wird, so daß das Vernetzungsmittel nach einer vorher bestimmten

2

Zeitdauer vollständig in die Granulatteilchen des Polyurethans eindiffundieren kann, bis die Oberfläche dieser Teilchen wieder trocken erscheint. Das Granulat läßt sich dann mittels eines Extruders verarbeiten, ohne daß die Gefahr von Klumpenbildung durch Verklebung der Granulatteilchen besteht. Die Menge an Vernetzungsmittel ist so groß, daß die für die Vernetzung aufzubringende Strahlendosis nur so hoch sein muß, daß ein Abbau der Polymerkette unter Festigkeitsverlust des Polyurethanmaterials im extrudierten Material nicht stattfindet. Die als Vernetzungsmittel in Mengen bis höchstens 40 Gew.-% verwendeten polyfunktionellen, ungesättigten Verbindungen sind beispielsweise Acrylate bzw. Methacrylate, Allylverbindungen, Dimaleimide, epoxidierte, polyfunktionelle oder andere bifunktionelle ungesättigte Verbindungen.

In der EP-A 80 665 wird ein Verfahren zur Herstellung flächiger, vernetzbarer Gebilde beschrieben, indem man in einem Zweiwellenschneckenextruder ein thermoplastisch verarbeitbares, vorgefertigtes Polymeres, z. B. Polyurethan oder Butadienacrylnitril-Copolymerisat einspeist, aufschmilzt, in der zweiten Zone mit niedrigviskosen, ethylenisch ungesättigten Verbindungen als Vernetzungspromotoren (z. B. (Meth)acrylaten von 1- oder mehrfunktionellen Alkoholen), Vernetzungshilfsmitteln wie Peroxiden und Fotoaktivatoren und gegebenenfalls weiteren Zusatzstoffen wie Antioxidantien bei Temperaturen bis 220 °C vermischt, die Mischung entgast und über Schlitzdüsen austrägt und schließlich über beheizte Walzenpaare auf die gewünschte Schichtdicke bringt.

In der EP-A 48 913 werden NCO-Prepolymere (auf Basis Polyetherdiolen und Toluylendiisocyanaten) mit bestimmten, einbaufähigen Bisacrylesterdiolen in Lösungsmitteln wie Toluol oder Tetrahydrofuran, gegebememfalls unter Katalysatorzusatz oder Zusatz von Peroxidstartern, umgesetzt. Die Lösungsmittel werden bei der Verformung entfernt und gegebenenfalls die Formkörper anschließend vernetzt. Man kann jedoch auch die Polymeren in Lösung vernetzen, den hochvernetzten Gummi zerkleinern und im Formpreßverfahren bei erhöhten Temperaturen verformen.

In der DE-OS 34 44 500 werden schwer entflammbare, elektrische oder optische Kabel beansprucht, deren mindestens außenliegende Schicht der Kabelumhüllung ganz oder teilweise aus strahlenvernetztem Polyurethan besteht. Von den verschiedenen Polyurethantypen hat sich ein sogenannter Ethertyp am vorteilhaftesten erwiesen, da ein solcher Typ neben dem sonstigen, für die Erfindung notwendigen Erscheinungsbild, speziell gegen Bakterienbefall resistent und hydrolysefest ist.

In der GB-A-1 133 436 ist ein Verfahren beschrieben, bei dem thermoplastische Polyurethane mit beispielsweise N,N'-Methylen-bis-acrylamid vernetzt werden. Die Eigenschaften der erthaltenen Polyurethane befriedigen aber nicht.

Es war nun Aufgabe der Erfindung, aus vorgefertigten Polyurethanelastomeren oder bevorzugt auf Basis der Ausgangsstoffe für Polyurethane wie Polyolen, Diisocyanaten und Kettenverlängerungsmitteln, in Gegenwart von speziellen Acrylat- oder Methacrylat-Verbindungen als Vernetzer und in Gegenwart von Polymerisationsinhibitoren unvernetzte, (meth)acrylathaltige, homogene Polyurethanelastomermischungen, vorzugsweise in Granulatform, herzustellen, die sich thermoplastisch zu Formkörpern verarbeiten lassen. Diese Formkörper sollen sich durch β- und/oder γ-Strahlen, bevorzugt Elektronenstrahlen, unter Verbesserung vieler Eigenschaften und ohne wesentlichen Strahlenabbau durch störende Spaltung der Polyurethanketten, vernetzen lassen. Bei der (bevorzugt kontinuierlichen) Herstellung der elastomeren, vernetzerhaltigen Polyurethane sind ganz bestimmte Produktionsparameter einzuhalten. So muß das Mischungsverhältnis in definierten Bereichen eingestellt werden. Außerdem ist während der Herstellung der thermoplastischen Polyurethane dafür zu sorgen, daß während dieses Herstellungsprozesses keine störende Vernetzung stattfindet. Deshalb sollen die PUR-Elastomere keine Peroxide oder Fotoaktivatoren enthalten. Die aus den erfindungsgemäßen Polyurethanen herstellbaren, vernetzten Formkörper sollen schließlich besondere, für Polyurethan-(PUR)-Elastomere teils neue Eigenschaften zeigen, z. B. verbesserte Hydrolysebeständigkeit, verbesserte Wärmeformbeständigkeit, verbesserte Lösungsmittelbeständigkeit, verbesserten Druckverformungsrest (Compression Set), verbesserten Reibungskoeffizienten, keine Spannungsrißanfälligkeit und insbesondere kein Abtropfen in der Flamme zeigen.

Gegenstand der Erfindung ist somit ein Verfahren zur Herstellung von thermoplastischen, unvernetzten, acrylat- und/oder methacrylat-haltigen Polyurethanen, die nach der Verarbeitung anschließend mit γ- und/oder Elektronenstrahlen vernetzbar sind, dadurch gekennzeichnet, daß man

I) mindestens 75 Gew.-% an vorgefertigten, thermoplastischen Polyurethanelastomeren, oder bevorzugt an üblichen Ausgangsstoffen zur Herstellung der thermoplastischen Polyurethanelastomeren, enthaltend

A) im wesentlichen bifunktionelle, höhermolekulare Verbindungen mit im wesentlichen zwei zerewitinoffaktiven Wasserstoffatomen und einem Molekulargewicht von 400 bis 20 000, vorzugsweise höhermolekulare Polyhydroxylverbindungen,

B) im wesentlichen bifunktionelle Kettenverlängerungsmittel wie Diole und/oder Diamine mit einem Molekulargewicht von 32 bis 399, vorzugsweise 62 bis 220 und

C) organischen Diisocyanaten, vorzugsweise aromatischen Diisocyanaten, insbesondere Diphenylmethan-4,4'-diisocyanat,

wobei das Molverhältnis der Diole A und B zu den Diisocyanaten C von 0,9 bis 1,2 beträgt,

gegebenenfalls

3

D) unter Zusatz von gegebenenfalls Stabilisatoren, Gleitmitteln und anderen, an sich bekannten Zusatzstoffen, jedoch keinen Peroxiden oder Fotopolymerisations-Initiatoren, die unter Einwirkung von aktinischem Licht in Radikale zerfallen,

II) als (Meth)acrylat-Vernetzer und Inhibitoren und/oder Antioxydantien

E) 4 bis 24 Gew.-% monomere Acrylat- und/oder Methacrylatverbindungen als Vernetzer, vorzugsweise Acrylat- und/oder Methacrylatverbindungen von zwei- oder mehrfunktionellen Alkoholen, sowie

F) 0,01 bis 3 Gew.-%, vorzugsweise 0,03 bis 1 Gew.-% an Polymerisationsinhibitoren und/oder Antioxidantien

den genannten Ausgangskomponenten, dem Reaktionsgemisch oder den reagierenden Massen vor vollständiger Bildung des hochpolymeren Polyurethans oder (weniger bevorzugt) den vorgebildeten thermoplastischen Polyurethanelastomeren

unterhalb von 230°, vorzugsweise ⩽ 210 °C zusetzt, wobei die Summe der unter I und II genannten Verbindungen vorzugsweise 100 Gew.-% ergibt,

und ein kurzfristiges Temperaturmaximum bei einer evtl. Reaktion von 240 °C, vorzugsweise von 220 °C, nicht überschreitet

und die Temperatureinwirkung auf diese Mischung nach Zugabe der Acrylat- und/oder Methacrylatverbindungen zeitlich auf wenige Minuten begrenzt, beispielsweise kontinuierlich in Extrudern innerhalb von weniger als 5 Minuten auf Temperaturen unterhalb 140 °C abkühlt oder im Gießprozeß nicht länger als 30 Minuten bei Temperaturen ⩽ 180° behandelt und gegebenenfalls granuliert.

Das Verfahren wird bevorzugt kontinuierlich durchgeführt, sei es durch kontinuierliche Zumischung der Vernetzer E) zur PUR-Elastomerschmelze in Extrudern o.ä. oder bevorzugt in Reaktionsverfahren, bei denen die Vernetzer den Ausgangsmaterialien der Polyurethanherstellung oder während der Reaktion zudosiert werden. Kontinuierliche Verfahren entsprechen den an sich bekannten Bandgießverfahren oder den Reaktionsschneckenverfahren bzw. Reaktionsknetverfahren, bevorzugt unter Verwendung von gleichsinnigdrehenden, selbstkämmenden Zweiwellenschneckenmaschinen oder Schneckenknetern, sogenannten Co-Knetern.

Das Verfahren ist besonders dadurch gekennzeichnet, daß als monomere Acrylat- und/oder Methacrylatverbindungen E) überwiegend hydroxylgruppenfreie, überwiegend nicht einbaufähige Ester der Acryl- und/oder Methacrylsäure mit aliphatischen, cycloaliphatischen oder araliphatischen Monoalkoholen mit mindestens 6 C-Atomen im Alkoholrest, bevorzugt aber Diolen und/oder Polyolen mit 3 oder mehr Hydroxylgruppen oder Ethoxylierungs- und/oder Propoxylierungsprodukten der Alkohole mit 2 bis 6 Mol Ethylenoxid und/oder Propylenoxid, zugesetzt werden.

Das Verfahren ist besonders dadurch gekennzeichnet, daßman als monomere Acrylat- und/oder Methacrylat-Verbindungen E) Acrylsäure- und/oder Methacrylsäureester von Diolen mit 4 bis 12 C-Atomen oder von Tri- bzw. Tetraalkoholen zusetzt, insbesondere Butandiol-1,4-acrylat, Butandiol-bis-methacrylat, besonders aber Trimethylolpropantrisacrylat, Trimethylolpropantrismethacrylat aber Pentaerythrittetraacrylat oder Pentaerythrit-tetramethacrylat.

Insbesondere werden die Vernetzer E) zusammen mit Inhibitoren und/oder Stabilisatoren F) in der Ausgangskomponente A) gelöst und anschließend wird die (bevorzugt kontinuierliche) Polyurethanelastomeren-Bildungsreaktion durchgeführt, oder man setzt die Vernetzer E) und/oder Inhibitoren F) und gegebenenfalls Teile der Komponente A) oder B) bei der kontinuierlichen PU-Elastomer-Bildungsreaktions dem reagierenden Gemisch, vorzugsweise nach überwiegend abgelaufener OH/NCO-Polyadditionsreaktion zu.

Es wird auch die Verwendung der so zugänglichen acrylat- und/oder methacrylathaltigen Polyurethan-Elastomeren zur thermoplastischen Verformung und Vernetzung der Formkörper mit β-Strahlen mit einer Strahlendosis von 10 bis 30 Mrad beansprucht.

Als Ausgangskomponenten für die Herstellung der Polyurethane und als Verfahren und als Apparaturen werden die im Prinzip bekannten Stoffe und Hilfsmittel eingesetzt, wie sie dem Fachmann bekannt sind.

So kommen als A) im wesentlichen lineare, höhermolekular Verbindungen mit im wesentlichen zwei zerewitinoffaktiven Wasserstoffatomen praktisch alle an sich bekannten, etwa zwei reaktive Gruppen wie Hydroxyl-, primäre und/oder sekundäre Amino-, SH, Carboxyl- und/oder andere reaktive Gruppen, z. B. Hydrazidgruppen mit Molekulargewichten von 400-20.000, insbesondere 800-4.000, in Betracht. Es sind dies etwa bifunktionelle Hydroxypolyester, Hydroxypolylactone, Hydroxypolyether, Hydroxypolythioether, Hydroxypolyesteramide, Hydroxypolycarbonate, Hydroxyacetale oder Vinylpolymere mit Hydroxygruppen oder anderen Endgruppen oder bereits Urethan- und/oder Harnstoffgruppen enthaltende Verbindungen. Diese Verbindungen entsprechen dem Stand der Technik und werden z. B. in den deutschen Offenlegungsschriften 23 02 564, 24 23 764, 25 49 372 (US-PS 3 963 679), DE-OS 24 02 840 (US-PS 3 984 607), DE-AS 24 57 387 (US-PS 4 035 213) und in der DE-OS 2 854 384 und 2 920 501 eingehend beschrieben.

Bevorzugt sind dies hydroxylgruppenhaltige, höhermolekulare Verbindungen, z. B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an

EP 0 243 775 B1

aromatischen Dicarbonsäuren, insbesondere Phthalsäure und gegebenenfalls auch Terephthalsäure, sowie deren Hydrierungsprodukte enthalten. Ferner sind geeingnet Hydroxypolycarbonate, Hydroxypoly-caprolactone oder auch Hydroxypolyetherdiole auf Basis Ethylenoxid, Propylenoxid, Tetrahydrofuran oder Mischpolyester aus Propylenoxid und/oder Ethylenoxid und/oder Tetrahydrofuran.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in der DE-OS 2 948 419, DE-OS 3 039 600, DE-OS 3 112 118, EP-A 61 627, EP-A 71 132 und EP-A 97 869 angegeben. In der erstgenannten Patentschrift werden auch weitere Verfahren des Standes der Technik zur Herstellung von aromatischen Aminoverbindungen höhermolekularer Struktur, sogenannter Aminopolyether, genannt, wie sie für das erfindungsge-mäße Verfahren geeignet sind. Weitere Herstellungsverfahren werden in der DE-AS 1 694 152, FR-PS 1 415 317 oder DE-AS 1 155 907 beschrieben.

Besonders bevorzugt werden als Polyole A) Adipinsäurepolyester oder Caprolactondiole oder Polycarbonatdiole, gegebenenfalls in Mischung mit Polyethern, ganz besonders bevorzugt werden Adipinsäurepolyester mit den Diolen Butandiol-1,4 und/oder Hexandiol-1,6.

Die erfindungsgemäß einzusetzenden Kettenverlängerungsmittel B) sind an sich bekannt und z. B. in den DE-OS 23 02 564, 24 23 764, 25 49 372, 24 02 840, 24 57 387 und 28 54 384 beschrieben. Es sind dies insbesondere niedermolekulare Polyalkohole, vorzugsweise Diole, Diamine, insbesondere aromatische Diamine, Hydrazine und Hydraziddervate. Als Diamine seien Diethyl-toluylendiamine, oder Isophorondiamin genannt. Auch Aminoalkohole wie Ethanolamin, Diethanolamin, N-Methyldiethanolamin, 3-Aminopropanol oder Verbindungen wie Hydrazin (Hydrat) oder Carbodihydrazid kommen erfindungsgemäß in Frage. Bevorzugte Kettenverlängerungsmittel sind Diole wie z. B. Ethylenglykol, Di- und Triethylenglykol, Hexandiol-1,6 und Hydrochinon-di-β-hydroxyethylether, sowie besonders bevorzugt das Butandiol-1,4, gegebenenfalls in Gemischen mit anderen Diolen, insbesondere Hexandiol-1,6. Das Molekulargewicht der Kettenverlängerer liegt bei 32 bis 399, bevorzugt bei 62 bis 220.

Ferner können in dem Fachmann bekannter Form monofunktionelle Verbindungen in untergeordneten Anteilen, z. B. von 0,01 bis 3 Gew.-%, bezogen auf PU-Feststoff, als sogenannte Kettenabbrecher mitverwendet werden. Beispiele sind Monoalkohole wie Butanol, 2-Ethylhexanol, Isobutylalkohol, Octanol-1, Stearylalkohol oder Monoamine wie Anilin, Dibutylamin, N-Methyl-stearylamin, Piperidin oder N,N-Dimethylhydrazin.

Erfindungsgemäß zu verwendende Diisocyanate C) sind die an sich bekannten aliphatischen, cycloaliphatischen araliphatischen, aromatischen und heterocyclischen Diisocyanate des Standes der Technik. Sie sind in den bei A) und B) beschriebenen Veröffentlichungen ausführlich aufgezählt. Erfindungsgemäß bevorzugte Diisocyanate sind Hexamethylendiisocyanat, Isophorondiisocyanat, Naph-thylen-1,5-diisocyanat, Tetramethyl-xylylendiisocyanat, 3,3'-Dimethyl-4,4'-diisocyanatodiphenyl (TODI), 1,4-Diisocyanatobenzol und das entsprechend hydrierte Produkt, Toluylendiisocyanate und insbesondere die Diphenylmethyldiisocyanat-Isomeren. Besonders bevorzugt ist das 4,4'-Diisocyanatodiphenylmethan oder sein Isomerengemisch mit bis zu 5 Mol-%, vorzugsweise 1 bis 4 Mol-%, des 2,4'-Diisocyanatodiphenylmethans, zumeist begleitet von sehr geringen Mengen des 2,2'-Diisocyanato-diphenylmethan-Isome-ren.

Die genannten Diisocyanate können gegebenenfalls zusammen bis etwa 15 Mol-% (bezogen auf Diisocyanat) eines höherfunktionellen Polyisocyanates eingesetzt werden ; die Menge des höherfunktionellen Polyisocyanats muß jedoch so begrenzt werden, daß ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl-bzw. Aminoverbindungen bzw. auch von Monoisocyanaten ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine wie Butyl- oder Dibutylamin, Hydroxylamin, Stearylamin, N-Methylstearylamin, Pyrrolidon oder Tetrahexylamin bzw. Butanonoxim, sowie Monoalkohole wie Butanol-1, 2-Ethylhexanol-1, Dodecanol-1, Isobutanol oder tert.-Butanol, Cyclohexanol oder Ethylenglykolmo-nomethylether erwähnt. Diese Abmischungen gehören nicht zum bevorzugten Bereich.

Bei der Polyurethan-Reaktion können selbstverständlich die üblichen Katalysatoren, Trennmittel, Antistatika, Flammschutzmittel, Füllstoffe, Glasfasern und Einfärbemittel nach dem Stand der Technik (siehe z. B. DE-OS 28 54 409, DE-OS 29 20 501 und DE-PS 33 29 775) zugegeben werden (als Komponente D).

Als Katalysatoren können so z. B. tertiäre Amine, organische Metallverbindungen, insbesondere organische Zinn-, Blei- und Titanverbindungen eingesetzt werden, z. B. Zinn-II-acetat, Zinn-II-ethylhexoat, Dibutylzinndilaurat oder Bleiacetat.

Als Trennmittel werden Wachse oder Öle verwendet, ferner z. B. langkettige Verbindungen mit Carboxyl-, Ester-, Amid-, Urethan- oder Harnstoffgruppen sowie auch Silikone, wie sie als Trennmittel beispielsweise in der DE-OS 2 204 470 aufgeführt sind.

Die Mengen an Reaktionskomponenten A) bis C) für die Polyurethane werden im erfindungsgemäßen

5

EP 0 243 775 B1

Verfahren in der Regel so gewählt, daß das NCO/OH-Äquivalentverhältnis von Isocyanat zu OH-Verbindungen zwischen 0,9 und 1,2, bevorzugt 0,98 und 1,08 liegt.

Als monomere Acrylat- und/oder Methacrylatverbindungen E) sind beispielsweise geeignet:

Ester der Acryl- oder Methacrylsäure mit aliphatischen, cycloaliphatischen oder araliphatischen Diolen und/oder Polyolen mit 3 oder mehr OH-Gruppen, bevorzugt 3 bis 4 Hydroxylgruppen, die gegebenenfalls auch weiter alkoxyliert, vorzugsweise ethoxyliert oder propoxiliert, sein können, Beispiele sind Ester von Diolen mit 4 bis 12 C-Atomen, wie Ethylenglykoldiacrylat, Propandiol-1,3-diacrylat, Butandiol-1,4-diacrylat, Hexandiol-1,6-diacrylat, Dodecandiol-1,12-di(meth)acrylat, Trimethylolpropan-triacrylat, Gemische aus Pentaerythrittri- und -tetraacrylat sowie entsprechende Methacrylate, ferner Di-(meth)acrylate von Polyetherglykolen des Glykols, Propandiols-1,3, Butandiols-1,4, Triacryl- oder -methacrylester von mit 2 bis 6 Mol Ethylenoxid oder Propylenoxid alkoxyliertem Trimethylolpropan.

Sehr viel weniger bevorzugt sind eine oder mehrere Hydroxylgruppen pro Molekül enthaltende Hydroxyalkylmethacrylate. Als Beispiele seien genannt: monofunktionelle Hydroxylderivate (wenig bevorzugt) wie Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat, 4-Hydroxybutylmethacrylat, 3-Chlor-2-hydroxypropylacrylat, 3-Chlor-2-hydroxypropylmethacrylat, 6-Hydroxyhexylacrylat, 6-Hydroxyhexylmethacrylat. Besser geeignet sind Verbindungen mit einer OH-Gruppe und zwei oder mehreren (Meth)acrylat-Resten, wie Glycerindiacrylat, -dimethylmethacrylat, Trimethylolpropandiacrylat, Trimethylolpropandimethacrylat, Pentaerythrit-triacrylat, Pentaerythrit-trimethacrylat sowie die Ester der Acrylsäure oder Methacrylsäure der oxethylierten oder oxpropylierten Alkohole. Acrylverbindungen mit nur einer Hydroxylgruppe sollen nur in untergeordneten Mengen [< 10, vorzugsweise < 4 Mol-% an (E)] verwendet werden, sonst kann ein zu starker Kettenabbruch im Polyurethan erfolgen.

Als Di- und Polyacrylate mit zwei OH- oder NH-Gruppen können z. B. die Monoacrylester des Glycerins, Trimethylolpropans, Pentaerythrits, oder die Monoacrylester der Ethoxylate bzw. Propoxylate dieser Polyole eingesetzt werden.

Sie sind aber nicht geeignet als alleinige Vernetzerkomponente E). Hydroxyamine, die durch stöchiometrische Umsetzung von Dialkanolaminen wie Diethanol oder Diisopropanolamin mit Diisocyanaten wie 2,4-Toluylendiisocyanat oder Isophorondiisocyanat, und Hydroxyalkylacrylaten z. B. Hydroxyethyl-oder -propylacrylat oder Methacrylat hergestellt werden, wobei die Umsetzung so durchgeführt wird, daß das Hydroxyalkylacrylat in einer Stufe mit dem Diisocyanat und dann das Umsetzungsprodukt hieraus in einer zweiten Stufe mit dem Dialkanolamin zur Reaktion gebracht wird, sind gleichfalls als alleinige Komponenten E) nicht gut einsetzbar. Sie sollten nur zusammen mit wenigstens 50, vorzugsweise wenigstens 80 Gew.-% an Hydroxyl- und/oder Aminogruppen-freien Estern der Acryl- oder Methacrylsäure von Di- oder Polyolen verwendet werden.

Unter. den bereits aufgezählten Verbindungen werden besonders bevorzugt die Polyacrylate oder Polymethacrylate wie Butandiolacrylat, Butandiolmethacrylat, insbesondere aber Trimethylolpropantriacrylat, Trimethylolpropantrimethacrylat, Pentaerythrittetraacrylat bzw. Pentaerythrittetramethacrylat sowie die entsprechenden Alkoxylierungsprodukte mit 2 bis 6 Mol Ethylenoxid und/oder Propylenoxid des Trimethylolpropans oder Pentaerythrits nach vorzugsweise praktisch vollständiger Veresterung mit Acryl- oder Methacrylsäure.

Bevorzugt sind die nichtfunktionellen Di- und/oder Polyacrylate bzw. -methacrylat vor den reinen hydroxyfunktionellen Acrylaten oder Methacrylaten, welche weniger geeignete Elastomere oder auch weniger gute Eigenschaften in den strahlenvernetzten Produkten ergeben.

Es hat sich jedoch herausgestellt, daß die technischen Vernetzer wie Trimethylolpropantrismethacrylat oder Pentaerithrittetraacrylat untergeordnete Beimengungen an nicht vollständig veresterten Verbindungen enthalten, z. B. Trimethylolpropanbismethacrylat bzw. Pentaerithrittrisacrylat. Solche technischen Gemische sind gleichwohl erfindungsgemäß gut einsetzbar, soweit sie insbesondere überwiegende Mengen an vollständig veresterten Polyacrylaten enthalten.

Um die Acrylate oder Methacrylate vor unerwünschter, vorzeitiger Polymerisation bei der Herstellung der Polyurethane zu bewahren, ist es notwendig, daß bei ihrem Einsatz 0,01 bis 3 Gew.-%, bevorzugt 0,03 bis 1 Gew.-%, bezogen auf die genannte Gesamtmischung, an Polymerisationsinhibitoren oder an Antioxidantien F) zugesetzt werden oder daß die Ausgangsstoffe, z. B. die Polyole A) diese Inhibitoren oder Stabilisatoren in der beanspruchten Menge bereits enthalten. Ganz besonders bevorzugt wird eine Menge von 0,03 bis 0,3 Gew.-%. Üblicherweise werden zwar den Acrylestern 10 bis 200 ppm an Polymerisationsinhibitoren zur Verhinderung vorzeitiger Polymerisation zugesetz (vgl. Ullmanns Encyclopädie der technischen zugesetz (vgl. Ullmanns Encyclopädie der technischen Chemie, 4. Auflage, Band 7, Seite 90). Größere Mengen werden aber deshalb nicht verwendet, da sie eine nachfolgende Polymerisation erheblich vermindern oder gar völlig behindern. Es ist insofern überraschend, daß die nach dem erfindungsgemäßen Verfahren hochstabilisierten Massen bei ihrer Verarbeitung problemlos vernetzt werden können.

Bei Aufbau aus den Ausgangskomponenten A bis C, können die Komponenten E) (Acrylat- bzw. Methacrylatverbindungen) und F) (Inhibitoren bzw. Stabilisatoren) vor (weniger bevorzugt) oder während der Polyurethanreaktion den Polyurethankomponenten in einer Menge von 4 bis 24 Gew.-%, bevorzugt 5 bis 15 Gew.-% zugegeben werden. Dies bedeutet, daß man z. B. die Verbindungen E) und/oder F) den Einzelkomponenten, vorzugsweise den höhermolekularen Verbindungen A) bzw. den Kettenverlängerern

6

B) zusetzt. Die Verbindungen E) und F) können jedoch auch am Anfang der Reaktionsmischung zugefügt werden, bzw. bevorzugt zu späteren Umsetzungszeitpunkten der bereits reagierenden Polyurethanmischung, vorzugsweise gegen Ende der Polyurethanreaktion, zugesetzt werden.

Die Polyurethanreaktion wird bevorzugt kontinuierlich in einer Stufe z. B. nach dem Bandprozeß (Gießprozeß) entsprechend DE-OS 32 24 324 oder in in Zweiwellenreaktionsschnecken entsprechend beispielsweise DE-OS 2 854 409 durchgeführt.

Es ist dabei wichtig, daß zur Verhinderung unerwünschter Vorvernetzungen in Gegenwart der Vernetzer E) eine nur mäßige thermische Einwirkung erfolgt. Diese kann bei niedrigen Temperaturen über längere Zeiten erfolgen, ohne daß die unerwünschte Vernetzung eintritt, bei relativ hohen Temperaturen muß die Temperatureinwirkung zeitlich auf z. B. wenige Minuten begrenzt sein. So sind etwa folgende thermischen Einwirkungen auf die vernetzerhaltigen PU-Massen vorzugsweise geeignet :

| | |
|---|---|
| bei 160-170 °C | etwa ≤ 30-40 Minuten |
| bei 170-180 °C | etwa ≤ 20-25 Minuten |
| bei 180-190 °C | etwa ≤ 10-15 Minuten |
| bei 190-200 °C | etwa ≤ 5-10 Minuten |
| bei 200-220 °C | etwa ≤ 3-5 Minuten |
| > 220 °C | ca. 1-3 Minuten |

Entsprechend diesen Vorgaben lassen sich geeignete Verfahrensweisen aussuchen :

Bei Handversuchen werden beispielsweise die Komponenten vorerwärmt, miteinander verrührt und auf Bleche oder beheizbare Gießtische ausgegossen. Je nach Schichtdicke (Abkühlungseffekte !) werden dabei unterschiedliche maximale Temperaturen erreicht (bei gleichen Starttemperaturen). Die gegossenen Schichten halten beispielsweise die Temperaturbereiche über 20-30 Minuten. Durch Steuerung z. B. der Ausgangstemperaturen läßt sich die maximale Temperatur in der vernetzerhaltigen Masse auch beeinflussen.

In diskontinuierlichen Bandanlagen (z. B. Verfahren nach DE-OS 3 224 324) kann durch Kühlung der Masse durch Anblasen in Kühlzonen die Zeitdauer bei etwa maximalen Temperaturen heruntergedrückt werden ; nach ausreichender Verfestigung kann ein Abschrecken in Flüssigkeiten anschließend erfolgen.

In den Zweiwellenextruden (bevorzugt mit Knetscheibenbesatz) wird vorzugsweise die Polyurethanreaktion bei relativ hohen Temperaturen gestartet, nach Bildung der Polyurethanschmelze bereits in den folgenden Segmenten heruntergekühlt (z. B. auf 180-210 °C), die Komponente E) zudosiert und dann weiter unter Temperatursenkung durch Kühlung, schnell ausgetragen. Bei den Temperaturen von 180-220 °C werden hierbei Verweilzeiten von weniger als 5 Minuten, vorzugsweise weniger als 3 Minuten, nach Eintragung der Vernetzerkomponente E) erzielt, die Masse in Flüssigkeitsbädern anschließend auf ungefährliche Temperaturen (etwa < 140 °C) heruntergekühlt und vorzugsweise anschließend granuliert.

In besonders bevorzugter Weise werden die Komponenten in einer Stufe entsprechend der DE-OS 28 54 409 in einem selbstreinigenden Zweischnecken-Knetextruder umgesetzt. Dabei werden Temperaturen von 140 bis 230°, bevorzugt 170 bis 210°, eingehalten und das Reaktionsgemisch innerhalb kurzer Zeit von < 5 min, bevorzugt in weniger als 3 Minuten, auf unter 140 °C, bevorzugt auf unter 130 °C, abgekühlt oder abgeschreckt. In einer besonders bevorzugten Reaktionsform werden den kontinuierlich sich bildenden Polyurethanelastomeren aus den Komponenten A) bis D) nach ihrer maximalen Reaktionstemperatur im vorderen Teil des Extruders, anschließend bei den bevorzugten, niedrigen Temperaturen unterhalb von 230° die Acrylat- bzw. Methacrylatverbindungen als Vernetzerkomponenten im hinteren Teil des Reaktionsschneckenextruders in flüssiger Form zugeführt und untergemischt und dann innerhalb von weniger als 5 Minuten, bevorzugt weniger als 3 Minuten nach Zugabe der Vernetzerkomponente E) auf Temperaturen unterhalb von 140° abgeschreckt. Als Mischgeräte für die kontinuierlich durchgeführte Reaktion und gegebenenfalls später zugeführten Vernetzerkomponente können auch Reaktionskneter wie kontinuierlich fördernde CO-Kneter z. B. der Firma Buss, Verwendung finden.

Es werden so PUR-Elastomer(granulate) erhalten, die noch gut verarbeitbar sind, jedoch bereits eine Veränderung ihres Aufbaus dahingehend erfahren haben, daß eine merkliche Verbesserung der PUR-Elastomereigenschaften auch schon ohne Strahlenvernetzung beobachtet wird.

Dies ist beim weniger bevorzugten Verfahren der Zumischung der Vernetzer E) im Extruder zu bereits vorgefertigten PUR-Elastomeren noch nicht der Fall. Bei diesem Verfahren wird vorgefertigtes PUR-Granulat im vorderen Teil des Zweiwellenschneckenextruders aufgeschmolzen und in die Schmelze (bei abfallendem Temperaturprofil) die Vernetzerkomponente E), gegebenenfalls zusammen mit F), kontinuierlich eindosiert. Nach < 5 Minuten Verweilzeit wird ausgetragen und schnell abgekühlt, vorzugsweise in Flüssigkeitsbädern wie Wasser, und anschließend granuliert.

Die so erfindungsgemäß hergestellten acrylat- bzw. methacrylathaltigen Polyurethangranulate sind nach dieser Methode unvernetzt und gut weiter thermoplastisch verarbeitbar. Sie können aus den üblichen Verarbeitungsmaschinen für Thermoplaste wie z. B. Extruder, Spritzgießmaschinen, Extrusionsblasformanlagen, Kalandern, Folienblasanlagen, Tiefziehanlagen bevorzugt aber auf kontinuierlich arbeitenden Anlagen, wie z. B. Extrudern, verarbeitet werden.

Auf diese Weise hergestellte Extrudate auf der Basis der Vernetzer und Inhibitoren enthaltenden

thermoplastischen Polyurethanelastomeren können mit energiereichen Strahlen, wie z. B. β- und/oder γ-Strahlen vernetzt werden. Bevorzugt ist die Vernetzung mit Elektronenstrahlen (β-Strahlen) bei einer Strahlendosis von 5 bis 100, bevorzugt 10 bis 30 Mrad. Entsprechende Formartikel weisen Vorteile, z. B. in der Wärmeformbeständigkeit (Hot-set-Test), in einer verbesserten Hydrolyse- und Lösungsmittelbeständigkeit als unvernetzte Polyurethane, und besserem Compression-Set bei höheren Temperaturen, auf. Desweiteren zeigen die strahlenvernetzten Formkörper der Erfindung praktisch kein Fließen, so daß die Formkörper in der Flamme nicht abtropfen und zu weiterer Förderung des Brandvorganges beitragen. Hiermit erschließen sich z. B. folgende Einsatzgebiete mit neuen Eigenschaftskombinationen :

wärmeformbeständige Profile, Dichtungen, Zahnriemen, Dämpfungselemente, Zahnräder, Platten, Karosserieaußenteile, Karosserieinnenteile, lösemittelbeständige Schläuche, z. B. Benzin-, Treibstoff- oder Lösemittelschläuche, Walzen und Dichtungen.

Die strahlenvernetzten Extrudate können auch besonders bevorzugt bei elektrischen Anwendungen, wie z. B. Außenummantelungen oder Lichtleiteranwendungen, eingesetzt werden, insbesondere wenn es sich um flammbeständige Ausführungen handeln soll.

Die folgenden Beispiele erläutern die Erfindung.

## Beispiele

I) Herstellung der erfindungsgemäßen, thermoplastischen, strahlenvernetzbaren PU-Elastomeren

A) nach dem Gießverfahren

### Beispiel 1 (erfindungsgemäß)

Rezeptur :

a. 59,69 Gew.-% Butandiol-1.4-Adipinsäure-Polyester-Diol Mol.-Gewicht 2250 (OHZ 50) (Komponente A) eine Mischung b. aus

9,09 Gew.-% Trimethylolpropantrismethacrylat (TRIM) (K-E)
0,06 Gew.-% 2,6-Di-t-butyl-4-methylphenol (K-F)
0,60 Gew.-% 2,2′-6,6′-Tetraisopropyl-diphenylcarbodiimid (K-D)
0,36 Gew.-% Stearylamid (K-D)

c. 6,00 Gew.-% Butandiol-1,4 (K-B)

d. 24,23 Gew.-% 4,4′-Diisocyanato-diphenylmethan (MDI) (K-C)

Herstellung des Granulats (nach Beispiel 1A)

Dem entwässerten Polyesterdiol a. werden unter Rühren bei einer Temperatur von ca. 110 °C die Komponenten b. und c. zugegeben. Die Temperatur des Polyolgemisches sinkt dabei auf 100 °C ab. Unter intensivem Rühren wird dann das bei 60 °C geschmolzene Diisocyanat (MDI) dazugegeben und solange mit dem Polyol vermischt, bis die Urethanreaktion startet. (Anstieg der Viskosität). Das Reaktionsgemisch gießt man in eine 80-100 °C heiße Wanne mit Teflonunterlage und heizt etwa eine halbe Stunde bei 110 °C aus. Das Fell wird dann in Streifen geschnitten und granuliert. Während der Herstellung wird eine maximale Reaktionstemperatur von 160 °C nicht überschritten. Das erhaltene PU-Elastomer ist unvernetzt und weiter gut thermoplastisch verarbeitbar und zeigt gute mechanische Festigkeitswerte. Wird eine höhere Temperatur, z. B. 192 °C erreicht (durch Anwendung höherer Temperatur der Ausgangsstoffe), so sinken die mechanischen Werte des Elastomeren sehr stark ab (vgl. Beispiel 1-0).

Das zu Formkörpern (2 mm Platten) verspritzte Granulat weist nach der Bestrahlung durch Elektronen mit einer Dosis 15 bis 30 Mrad die in Tabelle 1 beschriebenen Eigenschaften auf. Zur Bestrahlung wird ein Van de Graaf-Generator verwendet.

Die Dosis von 15-30 Mrad hat sich in Vorversuchen als günstig erwiesen. Unterhalb 10 Mrad kommt es zu keiner deutlichen Vernetzung und oberhalb 30 Mrad ist eine Abnahme der Zugfestigkeit festzustellen. Alle folgenden Versuche wurden deshalb mit einer Dosis die im Bereich zwischen 15 und 30 Mrad = 150 und 300 J/g bestrahlt.

(Siehe Tabelle 1 Seite 9 f.)

Tabelle 1

Eigenschaften des strahlenvernetzten TPU (Beispiel 1A)

| Prüfung auf: | Prüfnorm | Meßwert | Maßeinheit |
|---|---|---|---|
| Zugfestigkeit | DIN 53504 | 39 | MPa |
| Bruchdehnung | DIN 53504 | 330 | % |
| Elastizität | DIN 53512 | -*) | % |
| Druckverformungsrest 24 h 100°C | DIN 53517 | -*) | % |
| Abrieb | DIN 53516 | -*) | mm³ |
| Restmater nach 15 h in DMF 120°C | | 30 | % |
| Wärmedehnung    Dehnung unter Last | VDE 0472 | 33 | % |
| bei 220°C    bleibende Dehnung | § 615 | 5 | % |

*) an dieser Probe nicht bestimmt

### Beispiele 1, B bis H

Zu den erfindungsgemäßen Addukten gehören weiterhin die in Tabelle 2 aufgeführten Rezepturen 1B bis 1H. Bei der Herstellung wird wie in Beispiel 1A verfahren, mit Ausnahme von Beispiel 1H. Hier wurde das TPU nach dem im Deutschen Patent Nr. DE-PS 1 940 181 beschriebenen Prepolymerprozeß hergestellt (weniger bevorzugt). Beispiel 1B und 1C sind Variationen der TRIM-Menge. Bei Beispiel 1D und 1E wird die Einsatztemperatur gemäß Beispiel 1A variiert. Die Beispiele 1F bis 1G stellen Variationen der Acrylate (E) dar. Beim Versuch 1H wurde die PU-Basis geändert.

Die Eigenschaften der nach der Verarbeitung zu Prüfkörpern bestrahlten Proben sind in Tabelle 3 aufgelistet.

(Siehe Tabellen 2 und 3 Seite 11 ff.)

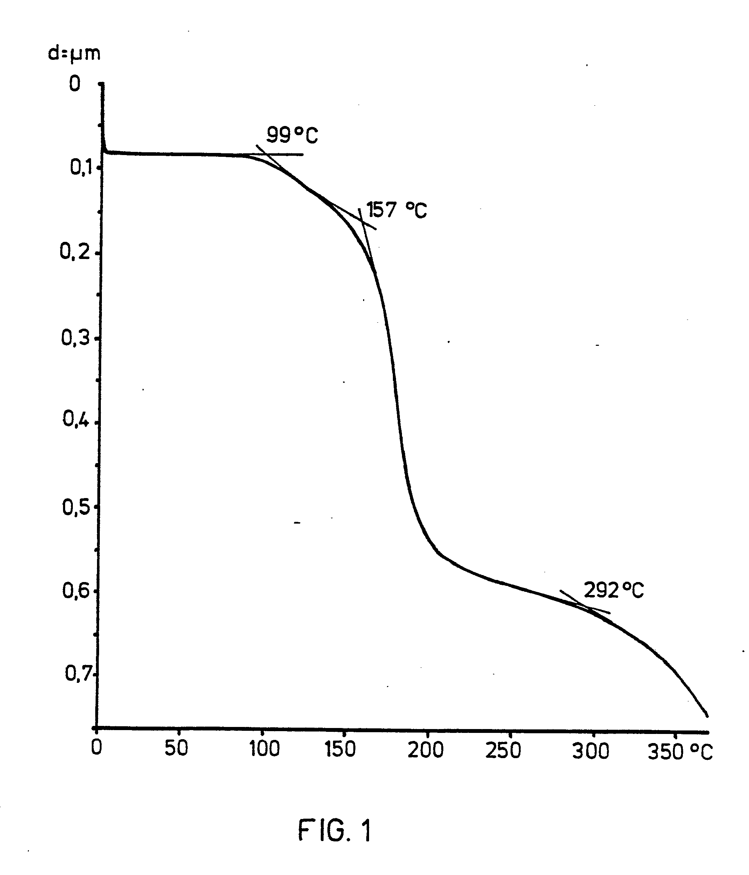

Die in den Versuchen 1A bis 1H beschriebenen, thermoplastischen, strahlenvernetzbaren Polyurethanelastomeren lassen sich thermoplastisch auf handelsüblichen Spritzgußmaschinen und Extrudern verarbeiten. Nach der Bestrahlung weisen sie gegenüber unvernetzten Polyurethanelastomeren (siehe Beispiel 1K) in einigen Punkten deutlich unterschiedliche Eigenschaften auf, besonders wird das Hochtemperaturverhalten verbessert, der Druckverformungsrest wird deutlich günstiger und der für die Kabelindustrie wichtige Wärmedehnungstest nach VDE 047, Paragraph 615, wird zum Teil ohne jede bleibende Dehnung hervorragend bestanden. Unvernetzte, thermoplastische Polyurethanelastomere zerreißen dagegen in diesem Test schon bei der Aufheizphase. Dieses Verhalten bei höheren Temperaturen ist auch bei der Messung der thermischen Erweichung durch thermomechanische Analyse (TMA) - siehe Abb. 1 zu sehen. In Abb. 1 werden thermomechanische Messungen an Versuch 1A mit einem Heizwert von 5 K/min. bei einer Probendicke von 0,85 mm und einer Last von 0,05 N bei Temperaturen zwischen 0 und 350 °C aufgezeichnet. Auf der Ordinate wird die Eindringtiefe d aufgetragen.

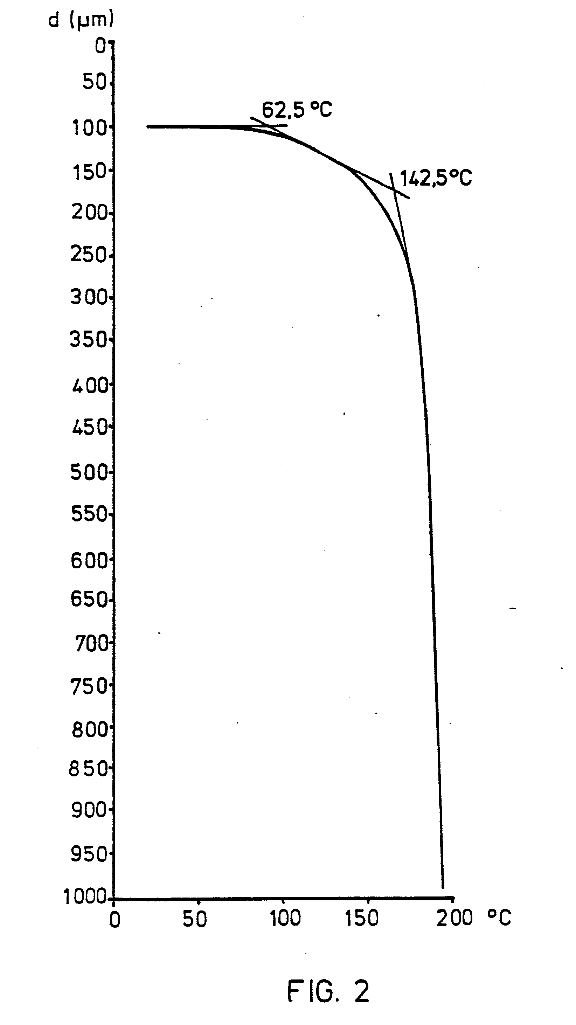

Vergleichsweise weist ein unvernetztes, thermoplastisches Polyurethan gleicher Basis eine wesentlich frühere Erweichung auf. So liegt der zweite Erweichungspunkt beim Vergleichsbeispiel K (Abb. 2) bei 142,5 °C, gegenüber 157 °C beim erfindungsgemäßen Beispiel 1A (siehe in Abb. 1). Der dritte Erweichungspunkt von Beispiel 1A fehlt beim nicht erfindungsgemäßen Beispiel ganz, die Probe ist vor Erreichen von 200 °C ohne Widerstand gegen Eindringen.

Die Lösemittelempfindlichkeit der vernetzten Polyurethane ist deutlich geringer (ca. 50 %) gegenüber unvernetzten Vergleichsansätzen.

### Nichterfindungsgemäße Beispiele 1I bis 1P (zum Vergleich)

Zu den nicht erfindungsgemäßen Beispielen zählen die Ansätze 1I bis 1P, sie sind in Tabelle 4 aufgeführt. Die mechanischen Eigenschaften gibt Tabelle 5 wieder.

Die Probekörper des strahlenvernetzten, thermoplastischen Polyurethans aus Ansatz 1-K, der ohne strahlenvernetzbaren Zusatz hergestellt wurde, ist im Wärmedehnungs-Test nach kurzer Zeit gerissen und zeight sowohl bei der thermomechanischen Analyse als auch bei der Schubmodulkurve im Bereich höherer Temperaturen ein deutlich schlechteres Verhalten, als das erfindungsgemäße Beispiel 1-A. Nach der Lagerung über 15h in DMF bei 120 °C ist die Probe aufgelöst.

Der Ansatz I enthält als Vernetzungskomponente ein urethanhaltiges, einbaufähiges Dihydroxyacrylat. Ansatz 1-L, bei dem das Trimethylolpropantrimethacrylat durch Triallylcyanurat ersetzt wurde, zeigt sowohl im Wärmedehnungs-Test als auch in der Lagerung keinen Unterschied zu Ansatz 1-K.

Im Ansatz 1-M ist die Menge an Trimethylolpropantrimethacrylat zu gering, um eine Verbesserung gegenüber Ansatz 1-K zu zeigen.

Der Ansatz 1-N enthält als Doppelbindungskomponente Butendiol. Dieses wurde anstelle des Kettenverlängerers Butandiol in das Polyurethan eingebaut. Dieser Ansatz zeigt neben sehr geringen Grundfestigkeiten keinerlei Änderung gegenüber Ansatz 1-K.

Im Ansatz 1-0 wurden die Einsatztemperaturen so hoch gewählt (Auslauftemperatur 190°), daß eine (teilweise) Polymerisation des Acrylates bereits beim Gießprozeß ablief, wodurch nicht mehr glatt verarbeitbare PUR-Elastomere erhalten wurden und die mechanischen Festigkeitswerte stark absinken (vgl. dagegen Beispiel 1A).

Beim Ansatz 1-P wurde der Inhibitor 2,6-Di-t-butyl-4-methylphenol weggelassen. Das Polyolgemisch aus Ester, Butandiol und Acrylat verquallte bei einer Temperatur von 80 bis 100 °C, so daß eine vernünftige Polyaddition mit dem Isocyanat nicht mehr möglich war.

(Siehe Tabellen 4 und 5 Seite 13 ff.)

Tabelle 2

| Erfindungsgemäße Beispiele (Gießprozeß) | 1-B | 1-C | 1-D | 1-E | 1-F | 1-G | 1-H* |
|---|---|---|---|---|---|---|---|
| Adipinsäure-Butandiol-1,4-Polyesterdiol MG 2250; OH-Zahl ~ 50 | 62,58 | 55,52 | 58,55 | 58,55 | 59,87 | 61,59 | 20,07 |
| Polypropylenoxidetherdiol MG 2000; OH-Zahl ~ 56 | | | | | | | 26,67 |
| Polypropylenoxidethertriol MG 3000; OH-Zahl ~ 56 | | | | | | | 1,40 |
| Trimethylolpropantrismethacrylat (TRIM) | 4,76 | 14,88 | 10,01 | 10,01 | | | 6,29 |
| Trimethylolpropantrisacrylat (TMPTA) | | | | | 9,00 | | |
| Pentaerythrit-tris/tetraacrylat-Gemisch (OH-Zahl = 132) | | | | | | 4,99 | |
| 2,6-Di-t-butyl-4-methylphenol | 0,06 | 0,06 | 0,06 | 0,06 | 0,06 | 0,04 | 0,11 |
| 2,2'-6,6'-Tetraisopropyl-di-phenyl-carbodiimid | 0,63 | 0,56 | 0,59 | 0,59 | 0,60 | 0,62 | 0,14 |
| Stearylamid | 0,38 | 0,33 | 0,35 | 0,35 | 0,36 | 0,37 | 0,42 |
| Butandiol-1,4 | 6,26 | 5,55 | 5,86 | 5,86 | 5,99 | 6,16 | 7,02 |
| Hexandiol-1,6 | | | | | | | 0,28 |
| 4,4-Diisocyanato-diphenylmethan | 25,3 | 23,04 | 24,59 | 24,59 | 24,13 | 26,24 | 29,59 |
| NCO/OH-Äquivalentverhältnis | 1,03 | 1,03 | 1,03 | 1,03 | 1,03 | 1,03 | 1,005 |
| Maximale Reaktionstemperatur °C | 168 | 150 | 140 | 172 | 148 | 165 | 180 |

*) über NCO-Prepolymer hergestellt (weniger bevorzugt).

EP 0 243 775 B1

Tabelle 3

Eigenschaften der strahlenvernetzten thermoplastischen Polyurethan-Elastomeren entsprechend Beispielen 1B bis 1H. (Die Zusammensetzung entspricht den Angaben der Tabelle 2).

| | | Versuchsnummer | | | | | | | |
| Prüfung | Norm | 1B | 1C | 1D | 1E | 1F | 1G | 1H | Maßeinheit |
|---|---|---|---|---|---|---|---|---|---|
| Modul 100 % | DIN 53504 | - | 29 | 14 | 15 | 10 | 11,4 | - | |
| Zugfestigkeit | DIN 53504 | 37 | 38 | 35 | 35 | 33 | 25 | 30 | MPa |
| Bruchdehnung | DIN 53504 | 480 | 200 | 355 | 339 | 375 | 235 | 425 | % |
| Elastizität | DIN 53512 | - | - | 32 | - | 31 | - | - | % |
| Druckverformungsrest (nach 24 h 100°C) | DIN 53517 | | | | | | | | % |
| Abrieb | DIN 53516 | - | - | 57 | 67 | 77 | 63 | - | mm³ |
| Restmaterial nach 15 h in DMF 120°C | | 18 | 45 | 27 | 30 | 22 | 21 | 4 | % |
| Wärmedehnung Dehnung unter Last | VDE 0472 | 53 | 20 | 20 | 15 | 15 | 5 | 180 | % |
| bei 200°C bleibende Dehnung | § 615 | 20 | 5 | 0 | 0 | 0 | 0 | 70 | % |
| Quellung in $CH_2Cl_2$ nach 24 Stunden | | - | - | 167 | 173 | 231 | 245 | - | Gew.-% |
| nach 28 Tagen | | - | - | 172 | 181 | 240 | 256 | - | Gew.-% |

EP 0 243 775 B1

Tabelle 4

| | Versuchsnummer (Angaben in Gew.-%) | | | | | | |
|---|---|---|---|---|---|---|---|
| | 1-I | 1-K | 1-L | 1-M | 1-N | 1-O | 1-P |
| Adipinsäure/Butandiol-1,4-Polyesterdiol MG 2250; OH-Zahl ¯50 | 60,65 | 65,57 | 59,81 | 64,14 | 65,57 | 58,55 | 59,71 |
| Triallylcyanurat (nicht erfindungsgemäß) | | | 9,09 | | | | |
| Trimethylolpropantrimethylacrylat (TRIM) | | | | 2,44[*] | | 10,01[**] | 9,09 |
| PRY-3732-2 | 4,89 | - | | | | | |
| Butendiol-1,4 | - | - | | | 6,56 | | |
| 2,6-Di-t-butyl-4-methylphenol | 0,04 | 0,07 | 0,06 | 0,06 | 0,07 | 0,06 | ohne |
| 2,2'-6,6'-Tetraisopropyl-diphenyl-carbodiimid | 0,61 | 0,66 | 0,60 | 0,64 | 0,66 | 0,59 | 0,60 |
| Stearylamid | 0,36 | 0,39 | 0,36 | 0,38 | 0,39 | 0,35 | 0,36 |
| Butandiol-1,4 | 6,07 | 6,56 | 5,98 | 6,41 | - | 5,86 | 6,00 |
| 4,4'-Diisocyanato-diphenylmethan | 27,00 | 26,75 | 24,10 | 25,91 | 26,75 | 24,59 | 24,24 |
| NCO/OH-Äquivalentverhältnis | 1,03 | 1,03 | 1,03 | 1,03 | 1,03 | 1,03 | 1,03 |
| maximale Temperatur °C beim Gießprozeß | 172 | 160 | 178 | 180 | 178 | 192 | 168 |

(auf dem Gießtisch halten sich diese Temperaturen ca. 30 Minuten unter langsamer Abkühlung.

PRY-3737-2 = Umsetzungsprodukt von 1 Mol Isoporondiisocyanat mit 1 Mol Hydroxyethylacrylat und 1 Mol Diethanolamin.

[*] zu geringe Einsatzmenge

[**] zu hohe maximale Temperatur beim Gießprozeß.

EP 0 243 775 B1

Tabelle 5

Eigenschaften der nichterfindungsgemäßen, strahlenvernetzten, thermoplastischen Polyurethan-Elastomeren entsprechend Beispiel 1K bis 1P

| Prüfung | | Norm | Versuchsnummer | | | | | | | Maßeinheit |
|---------|--|------|------|----|----|----|----|----|----|-----------|
| | | | 1I | 1K | 1L | 1M | 1N | 1O | 1P | |
| Modul 100 % | | DIN 53504 | 6,0 | 5 | | | | 13 | | MPa |
| Zugfestigkeit | | DIN 53504 | 30,3 | 37 | 30 | 12 | 15 | 15 | - | MPa |
| Bruchdehnung | | DIN 53504 | 469 | 470 | 610 | 480 | 590 | 180 | - | % |
| Elastizität | | DIN 53512 | | 43 | | | | 29 | - | % |
| Druckverformungsrest 24 h | | | | | | | | | | |
| bei 100°C | | DIN 53517 | 85 | 84 | | | | 97 | - | % |
| Abrieb | | DIN 53516 | 28 | 27 | | | | | - | mm³ |
| Restmaterial nach 15 h in DMF | | | 0,0 | 0,0 | 0,0 | 0,0 | 0,0 | 27 | - | % |
| bei 120°C | | | | | | | | | | |
| Wärmedehnung | Dehnung unter Last | VDE 0472 | gerissen | gerissen | gerissen | gerissen | gerissen | 30 | | % |
| bei 200°C | bleibende Dehnung | 615 | 150 | - | - | - | - | | 0 | % |
| Quellung in $CH_2Cl_2$ | 24 h | | 424 | 342 | | | | 194 | | Gew.-% |
| | 28 d | | 450 | 376 | | | | 195 | | Gew.-% |

EP 0 243 775 B1

B) Reaktionsschneckenverfahren (bevorzugtes, kontinuierliches, technisches Verfahren)

Kontinuierliche Herstellung der erfindungsgemäßen, thermoplastischen PU-Elastomeren auf einer Zweiwellenknetmaschine in der Reaktion

In den Beispielen wird eine Zweiwellenschneckenknetmaschine des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht dem etwa 20-fachen Wellendurchmesser.

Funktion und Wirkungsweise der Schneckenmaschine, von Knet- und Förderelementen des Wellenbesatzes usw. sind in den Firmenschriften der Firma Werner & Pfleiderer bzw. in der DE-AS 2 302 564 ausführlich beschrieben.

Die Verweilzeiten der Reaktionsschmelze in der Schneckenmaschine betragen in der Regel 0,3 bis 5, bevorzugt 0,5 bis 3 Minuten. Die Temperatur des Schneckengehäuses liegt zwischen etwa 60 und 220 °C (ca. 80 bis 230 °C in der Eingangszone: ca. 150 bis 220 °C in der Mitte des Extruders und ca. 80 bis 200 °C in der Austragszone). Bevorzugt werden maximale Temperaturen von ≤ 220 °C, insbesondere ≤ 210 °C. Die aus dem Extruder austretende Schmelze wird nach an sich bekannten Verfahren abgeschreckt und zerkleinert. Es ist wichtig, daß das Reaktionsgemisch nach der Zugabe des Acrylats innerhalb von 5 Minuten (bevorzugt 3 Minuten) auf Temperaturen von < 140 °C (bevorzugt 130 °C) abgekühlt wird.

Die Herstellung der thermoplastischen Polyurethanelastomeren erfolgt mit folgenden Ausgangsstoffen in den angegebenen Gewichtsteilen:

2A-Ansatz (erfindungsgemäß)

a. 59,69 Gew.-% Adipinsäure-Butandiol-1.4-Polyesterdiol Mol-Gewicht 2250 (OHZ 50) (Komponente A — abgekürzt als K-A bezeichnet)

0,06 Gew.-% 2,6-Di-t-butyl-4-methylphenol (K-F)
0,60 Gew.-% 2,2'-6,6'-Tetraisopropyl-diphenylcarbodiimid (K-D)

b. 6,00 Gew.-% Butandiol-1,4 (K-B)
c. 0,36 Gew.-% Stearylamid (K-D)
d. 9,09 Gew.-% Trimethylolpropantrismethylacrylat (K-E) (TRIM)
e. 24,23 Gew.-% 4,4'-Diisocyanato-diphenylmethan (MDI) (K-C)

Das NCO/OH-Äquivalentverhältnis beträgt 1,03 : 1.

Das Polyesterdiol a) wird aus dem 120 °C heißen Vorlagekessel über eine Zahnradpumpe in das Gehäuse 2 einer Zweiwellenknetmaschine eindosiert. Ebenfalls in das Gehäuse 2 wird über eine kleine Kolbenpumpe das Butandiol b) von Raumtemperatur zudosiert. Die Komponente c) wird als Pulver über eine Dosierschnecke in Gehäuse 1 eingebracht, Komponente d) wird über eine Zahnradpumpe bei Raumtemperatur ins Gehäuse 1 eingebracht. MDI, Komponente e), wird mit einer Temperatur von 60 °C über eine Zahnradpumpe in Gehäuse 2 gepumpt. An der Schneckenmaschine wurden folgende Gehäusetemperaturen eingestellt:

Gehäuse     1   3   5   7   9  11  12  Kopf
Temperatur 100 200 180 200 190 140 140 180 °C.

Verweilzeit 3 Min ; Extrudat in ein Wasserbad abgeschreckt, anschließend granuliert.

Das erhaltene, thermoplastische, unvernetzte Polyurethanelastomer weist nach der Verarbeitung auf üblichen Spritzgußmaschinen und Extrudern mit anschließender Strahlenvernetzung unter den in Beispiel 1A augfeführten Bedingungen, die in Tabelle 6) beschriebenen Eigenschaften auf. Diese wurden sowohl an Prüfplatten, als auch an extrudierten und bestrahlten Kabel gemessen. Die Verarbeitung auf einem für die TPU-Verarbeitung üblichen Extruder verläuft problemlos. Man erhält ein homogenes knotenfreies Extrudat.

(Siehe Tabelle 6 Seite 16 f.)

Beispiel 2B

(vorgefertigtes PUR-Granulat ; Vernetzerzusatz während der Extrusion).

Es wird ein vorgefertigtes, thermoplastisches Polyurethanelastomeres in Granulatform verwendet, welches der Rezeptur aus Beispiel 1A ohne Trimethylolpropantrimethacrylat-Zusatz entspricht. Das Granulat wird auf einem Zweiwellenextruder mit Knetscheibenbesats des Typs ZSK 53 V der Firma

EP 0 243 775 B1

Tabelle 6

Eigenschaften des erfindungsgemäßen, strahlenvernetzten, thermoplastischen Polyurethan-Elastomer aus Beispiel 2A

| Prüfung auf: | Prüfnorm | an Platte | an Kabel | Maßeinheit |
|---|---|---|---|---|
| Modul 100 % | DIN 53504 | 15 | | MPa |
| Zugfestigkeit | DIN 53504 | 31 | 35 | MPa |
| Bruchdehnung | DIN 53504 | 320 | 394 | % |
| Elastizität | DIN 53512 | | | % |
| Restmaterial nach | | | | |
| 15 h in DMF bei 120°C | | 34 | 19 | % |
| Wärmedehnung) Dehnung VDE 0472 | | 50 | 45 | % |
| bei 200°C ) mit Last | | | | |
| ) bleibende | | | | |
| ) Dehnung § 615 | | 15 | 10 | % |

Werner & Pfleiderer verwendet, Extruder wie in Beispiel 2A). Das Temperaturprofil auf dem Zweiwellenextruder ist wie folgt:

| Gehäuse | 1 | 2 + 3 | 4 + 5 | 6 + 7 | 8 + 9 | 10 + 11 | 12 | Kopf |
|---|---|---|---|---|---|---|---|---|
| Temperatur | 100 | 220 | 220 | 200 | 180 | 150 | 145 | 200 °C |

Das TPU-Granulat wurde jeweils über eine Schüttelrinne in Gehäuse eingebracht. Das Trimethylolpropantrimethacrylat wurde über eine Schlauchpumpe bei Raumtemperatur in das Gehäuse 6 des Extruders eingefördert. Die Mengenverhältnisse betrugen dabei 90, 91 Gew.-Teile der Polyurethanelastomere und 9,09 Gew.-Teile mit Acrylat-Vernetzer. Die Verweilzeit der Schmelze nach der Einspeisung des Acrylates wird möglichst kurz eingestellt, und beträgt 0,3 bis 3 Minuten (es wurden verschiedene Einstellungen zwischen diesen Verweilzeiten gefahren, welche keine wesentlichen Unterschiede ergaben). Die aus dem Extruder ausgetragene, vernetzerhaltige Polyurethanschmelze wird durch direkten Eintrag in Wasserbäder in kürzester Zeit auf Temperaturen < 130 °C abgeschreckt und anschließend zu Granulat zerkleinert.

Die Eigenschaften des mit einer Strahlendosis von 20 Mrad strahlenvernetzten, thermoplastischen Polyurethanelastomeren aus Beispiel 2B werden in Tabelle 7 wiedergegeben.

Tabelle 7

Eigenschaften des strahlenvernetzten, thermoplastischen Polyurethan-Elastomer aus Beispiel 2B

| Prüfung auf: | Prüfnorm | Wert | Maßeinheit |
|---|---|---|---|
| Modul 100 % | DIN 53504 | 7,1 | MPa |
| Zugfestigkeit | DIN 53504 | 35,4 | MPa |
| Bruchdehnung | DIN 53504 | 480 | % |
| Bruchverformungsrest | | | |
| 24 h 100° C | DIN 53517 | 75 | % |
| Restmaterial nach | | | |
| 15 h in DMF bei 120° C | | 15 | % |
| Wärmedehnung | | | |
| Dehnung mit Last | VDE 0472 | 30 | % |
| bleibende Dehnung | 615 | 0 | % |
| Quellung in CH$_2$Cl$_2$ | | | |
| nach 24 h | | 364 | Gew.-% |
| 28 d | | 383 | Gew.-% |

**Patentansprüche**

1. Verfahren zur Herstellung von thermoplastischen, unvernetzten, acrylat- und/oder methacrylathaltigen Polyurethanen, die nach der Verarbeitung anschließend mit v- oder Elektronenstrahlen vernetzbar sind, dadurch gekennzeichnet, daß man

I) mindestens 75 Gew.-% an vorgefertigten, thermoplastischen Polyurethanelastomeren, oder bevorzugt an üblichen Ausgangsstoffen zur Herstellung der thermoplastischen Polyurethanelastomeren, enthaltend

A) im wesentlichen bifunktionelle, höhermolekulare Verbindungen mit im wesentlichen zwei zerewitinoffaktiven Wasserstoffatomen und einem Molekulargewicht von 400 bis 20 000, vorzugsweise höhermolekulare Polyhydroxylverbindungen,

B) im wesentlichen bifunktionelle Kettenverlängerungsmittel wie Diole und/oder Diamine mit einem Molekulargewicht von 32 bis 399, vorzugsweise 62 bis 220 und

C) organischen Diisocyanaten, vorzugsweise aromatischen Diisocyanaten, insbesondere Diphenyl-methan-4,4'-diisocyanat, wobei das Molverhältnis der Diole A und B zu den Diisocyanaten C von 0,9 bis 1,2 beträgt,

D) gegebenenfalls unter Zusatz von gegebenenfalls Stabilisatoren, Gleitmitteln und anderen, an

EP 0 243 775 B1

sich bekannten Zusatzstoffen, jedoch keinen Peroxiden oder Polymerisations-Initiatoren, die unter der Einwirkung von aktinischem Licht in Radikale zerfallen,

II) als Acrylat- oder (Meth)acrylat-Vernetzer und Inhibitoren und/oder Antioxydantien

E) 4 bis 24 Gew.-% monomere Acrylat- und/oder Methacrylatverbindungen als Vernetzer, vorzugsweise Acrylat- und/oder Methacrylatverbindungen von zwei- und insbesondere mehrfunktionellen Alkoholen, sowie

F) 0,01 bis 3 Gew.-%, vorzugsweise 0,03 bis 1 Gew.-%, an Polymerisationsinhibitoren und/oder Antioxidantien

den genannten Ausgangskomponenten, dem Reaktionsgemisch oder der reagierenden Masse vor vollständiger Bildung des hochpolymeren Polyurethans oder der Schmelze vorgefertigter Polyurethanelastomerer unterhalb von 230°, vorzugsweise ⩽ 210° zusetzt, wobei die Summe der unter I und II genannten Verbindungen 100 Gew.-% ergibt, und ein kurzfristiges Temperatur-maximum bei einer evtl. Reaktion von 240 °C, vorzugsweise von 220 °C, nicht überschreitet und die Temperatureinwirkung auf diese Mischung nach Zugabe der Acrylat- und/oder Methacrylatverbingungen bei hohen Temperaturen zeitlich auf wenige Minuten begrenzt und gegebenenfalls granuliert.

2. Verfahren nach Anspruch 1, dadurch gekennzeichnet, daß man das Verfahren kontinuierlich, bevorzugt auf Zweiwellenextrudern mit vorzugsweise Schneckenbesatz oder Schneckenknetern durchführt.

3. Verfahren nach Ansprüchen 1 und 2, dadurch gekennzeichnet, daß als monomere Acrylat- und/oder Methacrylatverbindungen überwiegend hydroxylgruppenfreie, nicht einbaufähige Ester der Acryl- und/other Methacrylsäure mit aliphatischen, cycloaliphatischen oder araliphatischen Diolen und/oder Polyolen mit 3 oder mehr OH-Gruppen oder Ethoxylierungs- und/oder Propoxylierungsprodukten dieser Polyole mit 2 bis 6 Mol Ethylenoxid und/oder Propylenoxid, zusetzt.

4. Verfahren nach Ansprüchen 1 bis 3, dadurch gekennzeichnet, daß man als monomere Acrylat- oder Methacrylatverbindungen E) Acrylsäure- und/oder Methacrylsäureester von Diolen mit 4 bis 12 C-Atomen oder von Tri- bzw. Tetraalkoholen zusetzt.

5. Verfahren nach Ansprüchen 1 bis 4, dadurch gekennzeichnet, daß man Butandiol-1,4-acrylat, Butandiol-bis-methacrylat, Trimethylolpropantrisacrylat, Trimethylolpropantrismethylacrylat, Pentaerythritetraacrylat, Pentaerythrit-tetramethacrylat als Vernetzer E) zusetzt.

6. Verfahren nach Ansprüchen 1 bis 5, dadurch gekennzeichnet, daß man die Vernetzer E) zusammen mit Inhibitoren und/oder Stabilisatoren F) in der Ausgangskomponente A löst und anschließend die bevorzugt kontinuierliche Polyurethanelastomerbildungsreaktion durchführt.

7. Verfahren nach Ansprüchen 1 bis 5, dadurch gekennzeichnet, daß man die Vernetzer E) und gegebenenfalls Teile der Komponente F) bei der kontinuierlichen Polyurethanelastomerbildungsreaktion dem reagierenden Gemisch, vorzugsweise nach überwigend abgelaufener OH/NCO-Additionsreaktion zusetzt.

8. Verwendung der nach Verfahren 1 bis 7 zugänglichen acrylat- und/oder methacrylathaltigen Polyurethane zur thermoplatischen Verformung und Vernetzung der Formkörper mit β-Strahlen einer Strahlendosis von 10 bis 30 Mrad.

## Claims

1. A process for the production of thermoplastic, uncrosslinked, acrylate- and/or methacrylate-containing polyurethanes which, after processing, may be crosslinked by τ-radiation or by electron beams, characterized in that

I) at least 75 % by weight of preformed, thermoplastic polyurethane elastomers or, preferably, of typical starting materials for the production of the thermoplastic polyurethane elastomers containing

A) substantially bifunctional, relatively high molecular weight compounds essentially containing two zerewithinoff-active hydrogen atoms and having a molecular weight of from 400 to 20,000, preferably polyhydroxyl compounds of relatively high molecular weight,

B) substantially bifunctional chain-extending agents, such as diols or diamines, having a molecular weight of from 32 to 399 and preferably of from 62 to 220 and

C) organic diisocyanates, preferably aromatic diisocyanates, especially diphenylmethane-4,4'-diisocyanate, the molar ratio of the diols A) and B) to the diisocyanates C) being from 0.9 to 1.2,

D) in the presence of, optionally stabilizers, lubricants and other additives known per se, but no peroxides or polymerization initiators which decompose into radicals under the effect of actinic light,

II) as (meth) acrylate crosslinking agents and inhibitors and/or anti-oxidants

E) from 4 to 24 % by weight monomeric acrylate and/or methacrylate compounds as crosslinking agents, preferably acrylate and/or methacrylate compounds of difunctional and, more especially, higher alcohols and

F) from 0.01 to 3 % by weight and preferably from 0.03 to 1 % by weight of polymerization inhibitors and/or antioxidants are added to the above-mentioned starting compounds, to the reaction mixture or to the reacting mass

18

EP 0 243 775 B1

before complete formation of the highly polymeric polyurethane or to the melt of preformed polyurethane elastomers below 230 °C, preferably ≤ 210 °C, the sum of the compounds mentioned under I and II preferably being 100 % by weight, and a brief temperature maximum in the event of a possible reaction of 240 °C and preferably 220 °C is not exceeded, and the exposure of this mixture to heat after addition of the acrylate and/or methacrylate compounds is limited to a few minutes, optionally followed by granulation.

2. A process as claimed in claim 1, characterized in that the process is carried out continuously, preferably in twin-screw extruders, preferably with screw trim, or screw kneaders.

3. A process as claimed in claims 1 and 2, characterized in that predominantly hydroxyl-group-free, non-incorporable esters or acrylic and/or methacrylic acid with aliphatic, cycloaliphatic or araliphatic diols and/or polyols containing 3 or more OH groups or ethoxylation and/or propoxylation products of these polyols with 2 to 6 moles ethylene oxide and/or propylene oxide are added as the monomeric acrylate and/or methacrylate compounds.

4. A process as claimed in claims 1 to 3, characterized in that acrylic acid and/or methacrylic acid esters of $C_{4-12}$ diols or of tri- or tetra-alcohols are added as the monomeric acrylate or methacrylate compounds E).

5. A process as claimed in claims 1 to 4, characterized in that 1,4-butanediol acrylate, butanediol bismethacrylate, methacrylate, trimethylol propane tris-acrylate, trimethylol propane tris-methacrylate, pentaerythritol tetra-acrylate, pentaerythritol tetramethacrylate is added as the crosslinking agent E).

6. A process as claimed in claims 1 to 5, characterized in that the crosslinking agents E) are dissolved together with inhibitors and/or stabilizers F) in the starting component A), after which the reaction by which the polyurethane elastomer is formed is carried out, preferably continuously.

7. A process as claimed in claims 1 to 5, characterized in that the crosslinking agents E) and, optionally, parts of component F) are added to the reacting mixture during the continuous reaction by which the polyurethane elastomer is formed, preferably after the ON/NCO reaction is largely complete.

8. The use of the acrylate- and/or methacrylate-containing polyurethanes obtainable by the process claimed in claims 1 to 7 for thermoplastic molding and crosslinking of the moldings by β- in a dose of from 10 to 30 Mrad.


**Revendications**

1. Procédé de préparation de polyuréthannes thermoplastiques non réticulés contenant des acrylates et/ou méthacrylates et qui sont réticulables après façonnage sous l'action de rayonnements γ ou de faisceaux d'électrons, caractérisé en ce que :

I) à au moins 75 % en poids d'un élastomère de polyuréthanne thermoplastique formé au préalable ou, de préférence, de produits de départ usuels de la préparation des élastomères de polyuréthannes thermoplastiques, contenant :

A) des composés à haut poids moléculaire essentiellement bifonctionnels contenant essentiellement deux atomes d'hydrogène actif selon Zerewitinoff et ayant un poids moléculaire de 400 à 20 000, de préférence des composés polyhydroxylés à haut poids moléculaire,

B) des agents d'allongement des chaînes essentiellement bifonctionnels tels que des diols et/ou des diamines de poids moléculaire 32 à 399, de préférence 62 à 220 et

C) des diisocyanates organiques, de préférence des diisocyanates aromatiques, en particulier du diphénylméthane-4,4'-diisocyanate, le rapport molaire des diols A) et B) et des diisocyanates C) étant de 0,9 à 1,2,

D) éventuellement après adjonction des stabilisants et lubrifiants éventuels et d'autres additifs connus en soi mais non de peroxydes ou d'inducteurs de polymérisation qui se décomposent sous l'action de la lumière actinique, en radicaux libres,

II) on ajoute en tant qu'acrylates ou méthacrylates réticulants et inhibiteurs et/ou antioxydants

E) 4 à 24 % en poids de dérivés acryliques et/ou méthacryliques monomères servant d'agents réticulants, de préférence des dérivés acryliques et/ou méthacryliques d'alcools bifonctionnels et plus spécialement polyfonctionnels, et

F) 0,01 à 3 % en poids, de préférence 0,03 à 1 % en poids d'inhibiteurs de polymérisation et/ou d'antioxydants,

aux composants de départ mentionnés, au mélange de réaction ou à la masse en cours de réaction avant formation complète du polyuréthanne macropolymère ou à la masse fondue de l'élastomère de polyuréthanne formé au préalable, à des températures inférieures à 230 °C, de préférence inférieures ou égales à 210 °C, la somme des composés énumérés sous I) et II) représentant 100 % en poids, et, dans le cas d'une réaction éventuelle, on ne dépasse pas un maximum de température de courte durée de 240 °C, de préférence de 220 °C, et, dans le cas de températures élevées, on limite dans le temps à quelques minutes l'action de la température sur ce mélange après addition des dérivés acryliques et/ou méthacryliques, puis, le cas échéant, on met à l'état de granulés.

2. Procédé selon la revendication 1, caractérisé en ce que le procédé est mis en oeuvre en continu, de préférence dans des extrudeuses à deux vis ou avec des malaxeurs à vis, de préférence à vis équipées.

19

3. Procédé selon les revendications 1 et 2, caractérisé en ce que l'on ajoute en tant que dérivés acryliques et/ou méthacryliques monomères des esters pratiquement exempts de groupes hydroxy et non combinables chimiquement de l'acide acrylique et/ou méthacrylique et de diols aliphatiques, cycloaliphatiques ou araliphatiques et/ou de polyols contenant 3 groupes OH ou plus ou de produits d'éthoxylation et/ou de propoxylation de ces polyols par 2 à 6 moles d'oxydes d'éthylène et/ou d'oxyde de propylène.

4. Procédé selon les revendications 1 à 3, caractérisé en ce que l'on ajoute en tant que dérivés acryliques et/ou méthacryliques monomères E) des esters acryliques et/ou méthacryliques de diols en $C_4$-$C_{12}$ ou de tri- ou tétra-alcools.

5. Procédé selon les revendications 1 à 4, caractérisé en ce que l'on ajoute en tant qu'agents réticulants E) l'acrylate du 1,4-butane-diol, le bis-méthacrylate du butane-diol, le tris-acrylate du triméthylolpropane, le tris-méthylacrylate du triméthylolpropane, le tétra-acrylate du pentaérythritol, le tétraméthacrylate du pentaérythritol.

6. Procédé selon les renvendications 1 et 5, caractérisé en ce que l'on dissout les agents réticulants E) avec les inhibiteurs et/ou stabilisants F) dans le composant de départ A) puis on procède à la réaction de formation de l'élastomère de polyuréthanne, de préférence en continu.

7. Procédé selon les revendications 1 à 5, caractérisé en ce que, dans la réaction continue de formation de l'élastomère de polyuréthanne, on ajoute les agents réticulants E) et le cas échéant une partie du composant F) au mélange en cours de réaction, de préférence après déroulement de la plus grande partie de la réaction d'addition OH/NCO.

8. Utilisation des polyuréthannes contenant des acrylates et/ou méthacrylates obtenus par un procédé selon les revendications 1 à 7, pour le façonnage thermoplastique et la réticulation d'objets moulés sous l'action de rayonnements β à une dose de radiations de 10 à 30 Mrad.

FIG. 1

FIG. 2